(19) Europäisches Patentamt
European Patent Office
Office européen des brevets

(11) EP 4 782 406 A1

(12) EUROPEAN PATENT APPLICATION

(43) Date of publication:
**29.07.2026 Bulletin 2026/31**

(21) Application number: **26153139.6**

(22) Date of filing: **21.01.2026**

(51) International Patent Classification (IPC):
***C01G 53/42*** *(2025.01)* ***C01G 53/84*** *(2025.01)*
***H01M 4/525*** *(2010.01)* ***H01M 10/0525*** *(2010.01)*

(52) Cooperative Patent Classification (CPC):
**C01G 53/84; C01G 53/42; H01M 4/525; H01M 10/0525;** C01P 2002/54; C01P 2002/85; C01P 2004/03; C01P 2004/51; C01P 2004/61; C01P 2004/84; C01P 2006/40; C01P 2006/80

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **21.01.2025 KR 20250008936**

(71) Applicants:
- **SK Innovation Co., Ltd.**
**Seoul 03188 (KR)**
- **SK On Co., Ltd.**
**Seoul 03161 (KR)**

(72) Inventors:
- **KIM, Sang Bok**
**34124 Daejeon (KR)**
- **KIM, Sung Beom**
**34124 Daejeon (KR)**
- **PARK, Sang Min**
**34124 Daejeon (KR)**
- **LEE, Ha Eun**
**34124 Daejeon (KR)**
- **LIM, Woo Seob**
**34124 Daejeon (KR)**
- **CHOI, Jae Young**
**34124 Daejeon (KR)**
- **CHOI, Jae Ho**
**34124 Daejeon (KR)**

(74) Representative: **Prüfer & Partner mbB**
**Patentanwälte · Rechtsanwälte**
**Sohnckestraße 12**
**81479 München (DE)**

(54) **CATHODE ACTIVE MATERIAL FOR LITHIUM SECONDARY BATTERY, METHOD FOR PREPARING THE SAME, AND LITHIUM SECONDARY BATTERY INCLUDING THE SAME**

(57) A cathode active material for a lithium secondary battery according to exemplary embodiments of the present disclosure includes lithium metal oxide particles and a sulfur (S)-containing compound and a sodium (Na)-containing compound present on the surface or inside the lithium metal oxide particles. The surface portion of the lithium metal oxide particle has a concentration gradient of sulfur (S). The absolute value of the slope of the XPS signal of sulfur (S) in the surface portion is 20 cps/nm to 80 cps/nm.

[FIG. 1]

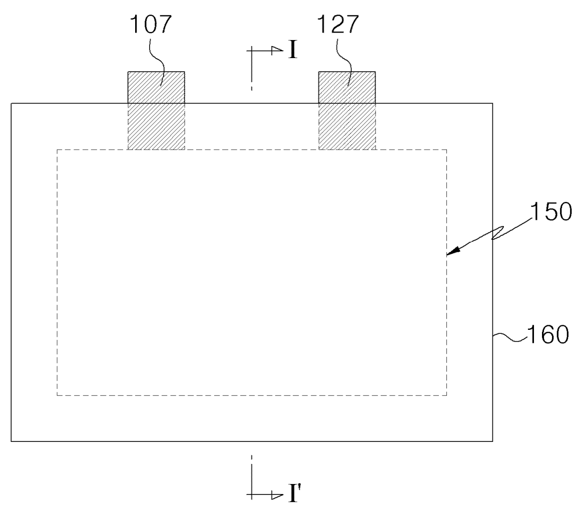


EP 4 782 406 A1

## Description

[BACKGROUND OF THE INVENTION]

1. Field of the Invention

The present disclosure relates to a cathode active material for a lithium secondary battery, a method for preparing the same, and a lithium secondary battery including the cathode active material.

2. Description of the Related Art

Secondary batteries are batteries that can be repeatedly charged and discharged. With the development of information and communication and display industries, they have been widely applied as power sources for portable electronic communication devices, such as camcorders, mobile phones, and laptop PCs. In addition, battery packs including secondary batteries have recently been developed and applied as power sources for eco-friendly vehicles, such as electric vehicles.

Examples of secondary batteries may include a lithium secondary battery, a nickelcadmium battery, and a nickel-hydrogen battery. Among these, the lithium secondary battery is actively developed and applied due to its high operating voltage, high energy density per unit weight, and advantages in charging speed and weight reduction.

For example, the lithium secondary battery may include an electrode assembly including repeatedly stacked cathodes and anodes, and an electrolyte that impregnates the electrode assembly. The lithium secondary battery may further include an outer case, such as a pouch, that accommodates the electrode assembly and the electrolyte.

For example, a nickel-cobalt-manganese (NCM)-based active material containing nickel, cobalt, and manganese is used as a cathode active material in the lithium secondary batteries. In addition, as the application scope of lithium secondary batteries expands to large devices such as electric vehicles, the development of cathodes capable of achieving high capacity in lithium secondary batteries is required. Furthermore, there is a need to prevent cycle life degradation of the secondary battery due to side reactions between the cathode and the electrolyte.

Accordingly, designing cathode active material particles that can enhance the capacity characteristics and cycle life of the secondary batteries is required.

[SUMMARY OF THE INVENTION]

An object of the present disclosure is to provide a cathode active material for a lithium secondary battery having improved cycle life characteristics and stability.

Another object of the present disclosure is to provide a method for preparing the cathode active material.

Still another object of the present disclosure is to provide a lithium secondary battery including the cathode active material.

A cathode active material for a lithium secondary battery according to exemplary embodiments of the present disclosure includes: lithium metal oxide particles; and a sulfur (S)-containing compound and a sodium (Na)-containing compound present on the surface or inside the lithium metal oxide particles, wherein a surface portion of the lithium metal oxide particles have a sulfur (S) concentration gradient, and the absolute value of the slope of the sulfur (S) XPS signal in the surface portion is 20 cps/nm to 80 cps/nm.

In some embodiments, the sulfur-containing compound may be distributed in the surface portion.

In some embodiments, the surface portion may correspond to a depth of 200 nm or less from the surface of the lithium metal oxide particles.

In some embodiments, the sulfur-containing compound may have a structure represented by Formula 1 below:

[Formula 1] $Li_{x1}(NH_4)_{y1}(NH_3)_{z1}H_{w1}(OH)_{v1}S_{u1}O_{t1}$

In Formula 1, $0 \leq x1 \leq 2$, $0 \leq y1 \leq 1$, $0 \leq z1 \leq 1$, $0 \leq w1 \leq 1$, $0 \leq v1 \leq 1$, $0 < u1 \leq 1$, and $0 \leq t1 \leq 4$.

In some embodiments, the sulfur-containing compound may include at least one selected from the group consisting of lithium sulfate ($Li_2SO_4$), lithium sulfate monohydrate ($Li_2SO_4 \cdot H_2O$), lithium ammonium sulfate ($Li(NH_4)SO_4$), lithium hydroxylammonium sulfate ($Li(NH_3)(OH)SO_4$), lithium hydrogen sulfate ($LiHSO_4$), and lithium sulfide ($Li_2S$).

In some embodiments, no sodium (Na) concentration gradient may be present on the surface or inside the lithium metal oxide particles.

In some embodiments, the sodium-containing compound may have a structure represented by Formula 2 below:

[Formula 2] $Li_{x2}Na_{y2}H_{z2}S_{w2}O_{v2}$

In Formula 2, $0 \leq x2 \leq 1$, $0 < y2 \leq 2$, $0 \leq z2 \leq 1$, $0 \leq w2 \leq 2$, and $0 \leq v2 \leq 8$.

In some embodiments, the sodium-containing compound may include at least one selected from the group consisting of $LiNaSO_4$, $Na_2SO_4$, $NaHSO_4$, $Na_2S_2O_3$, $Na_2S_2O_5$, and $Na_2S_2O_8$.

In some embodiments, the sulfur content of the lithium metal oxide particles may be 2,500 ppm to 5,000 ppm.

In some embodiments, the sodium content of the lithium metal oxide particles may be 150 ppm to 600 ppm.

In some embodiments, the lithium metal oxide particles may further include tungsten, and the tungsten content of the lithium metal oxide particles may be 3,000 ppm to 5,000 ppm.

In some embodiments, the residual lithium content of the lithium metal oxide particles may be 4,000 ppm or less.

In some embodiments, the residual lithium may include at least one compound of $Li_2CO_3$ or LiOH.

In some embodiments, the lithium metal oxide particles may have a median particle diameter ($D_{50}$) of 9.0 μm to 13.0 μm, and the median particle diameter may be the longest diameter of the particles at a volume fraction of 50% in a cumulative particle size distribution.

In some embodiments, the lithium metal oxide particles may have a particle size distribution width (SPAN) of 0.9 to 1.5, and the SPAN may be defined by Equation 1 below:

[Equation 1]

$$SPAN = (D_{90} - D_{10}) / D_{50}$$

In Equation 1, $D_{10}$ may denote the longest particle diameter at a volume fraction of 10% in the cumulative particle size distribution, $D_{50}$ may denote the longest particle diameter at a volume fraction of 50% in the cumulative particle size distribution, and $D_{90}$ may denote the longest particle diameter at a volume fraction of 90% in the cumulative particle size distribution.

In a method for preparing a cathode active material for a lithium secondary battery according to exemplary embodiments of the present disclosure, metal salts of active material components are mixed and coprecipitated to obtain an active material precursor. The active material precursor is mixed with a lithium source and primary calcination is performed to obtain a lithium metal oxide particle precursor. The lithium metal oxide particle precursor is pre-coated with a sulfur-containing coating material. The pre-coated lithium metal oxide particle precursor is dried in a dryer maintained at an internal temperature of 100 °C to 250 °C. The dried, pre-coated lithium metal oxide particle precursor is then subjected to secondary calcination at a temperature greater than 250 °C and less than 500 °C.

In some embodiments, in the drying step, the drying may be performed while introducing water into the dryer.

In some embodiments, the amount of water introduced into the dryer may be 12% by weight or less based on the total weight of the pre-coated lithium metal oxide particle precursor.

In some embodiments, the time required for introducing water into the dryer may be 10 to 45 minutes.

A lithium secondary battery according to exemplary embodiments of the present disclosure includes: a cathode including the above-described cathode active material; an anode disposed opposite the cathode; and a separator interposed between the cathode and the anode.

The cathode active material according to exemplary embodiments of the present disclosure may be designed to control the concentration gradient of a sulfur (S)-containing compound, thereby improving the cycle life and capacity characteristics of the secondary battery.

The cathode active material according to exemplary embodiments of the present disclosure may have a sodium (Na)-containing compound uniformly distributed without a concentration gradient, thereby improving the conductivity and rate characteristics of the secondary battery.

The cathode active material for a lithium secondary battery and the lithium secondary battery of the present disclosure may be widely applied in green technology fields, such as electric vehicles, battery charging stations, as well as solar power generation, wind power generation, and the like, which use the batteries. In addition, the cathode active material for a lithium secondary battery and the lithium secondary battery of the present disclosure may be used in eco-friendly electric vehicles, hybrid vehicles, and the like, which are aimed at mitigating climate change by reducing air pollution and greenhouse gas emissions.

[BRIEF DESCRIPTION OF THE DRAWINGS]

The above and other objects, features and advantages of the present disclosure will be more clearly understood from the following detailed description taken in conjunction with the accompanying drawings, in which:

FIGS. 1 and 2 are schematic plan and cross-sectional views respectively illustrating a lithium secondary battery according to exemplary embodiments;

FIGS. 3 and 4 are X-ray photoelectron spectroscopy (XPS) depth profile results for sulfur and sodium of Example 1, respectively;

FIGS. 5 to 6 are XPS depth profile results for sulfur and sodium of Comparative Example 1, respectively; and

FIGS. 7 to 9 are scanning-electron microscope-energy dispersive X-ray spectroscopy (SEM-EDS) results for a cross-section of the cathode active material of Example 1.

[DETAILED DESCRIPTION OF THE INVENTION]

The present disclosure provides a cathode active material for a lithium secondary battery (hereinafter, also abbreviated as "cathode active material") according to exemplary embodiments, as well as a cathode for a lithium secondary battery (hereinafter, also abbreviated as "cathode") and a lithium secondary battery (hereinafter, also abbreviated as "secondary battery") including the cathode active material.

Hereinafter, embodiments of the present disclosure will be described in detail with reference to the drawings. However, the embodiments are merely illustrative, and the present disclosure is not limited to the specific embodiments described as examples.

The cathode active material according to exemplary embodiments may include a material that allows reversible intercalation and deintercalation of lithium ions.

In exemplary embodiments, the cathode active material may include lithium metal oxide particles.

In exemplary embodiments, the surface or inside the lithium metal oxide particles may include a sulfur (S)-containing compound and/or a sodium (Na)-containing compound.

In exemplary embodiments, the sulfur-containing compound may be distributed on the surface portion of the lithium metal oxide particles. Accordingly, side reactions between the cathode active material and the electrolyte may be reduced, thereby improving the cycle life characteristics of the secondary battery. The surface portion may correspond to a depth of 200 nm or less from the outer surface of the lithium metal oxide particles. For example, the surface portion may correspond to a depth of 0 to 200 nm, 0 to 150 nm, 0 to 120 nm, or 0 to 100 nm from the outer surface of the lithium metal oxide particles.

In exemplary embodiments, the sulfur-containing compound may have a structure represented by Formula 1 below.

[Formula 1] $Li_{x1}(NH_4)_{y1}(NH_3)_{z1}H_{w1}(OH)_{v1}S_{u1}O_{t1}$

In Formula 1, x1, y1, z1, w1, v1, u1 and tl may satisfy $0 \le x1 \le 2$, $0 \le y1 \le 1$, $0 \le z1 \le 1$, $0 \le w1 \le 1$, $0 \le v1 \le 1$, $0 < u1 \le 1$, and $0 \le t1 \le 4$.

In exemplary embodiments, the sulfur-containing compound may include lithium sulfate ($Li_2SO_4$), lithium sulfate monohydrate ($Li_2SO_4 \cdot H_2O$), lithium ammonium sulfate ($Li(NH_4)SO_4$), lithium hydroxylammonium sulfate ($Li(NH_4)SO_4$), lithium hydrogen sulfate ($LiHSO_4$), or lithium sulfide ($Li_2S$).

In exemplary embodiments, the sodium-containing compound may be formed on the surface and inside the lithium metal oxide particles. Accordingly, the conductivity of lithium (Li) ions in the secondary battery may be improved.

In exemplary embodiments, the sodium-containing compound may have a structure of Formula 2 below.

[Formula 2] $Li_{x2}Na_{y2}H_{z2}S_{w2}O_{v2}$

In Formula 2, x2, y2, z2, w2 and v2 may satisfy $0 \le x2 \le 1$, $0 < y2 \le 2$, $0 \le z2 \le 1$, $0 \le w2 \le 2$, and $0 \le v2 \le 8$.

In exemplary embodiments, the sodium-containing compound may include $LiNaSO_4$, $Na_2SO_4$, $NaHSO_4$, $Na_2S_2O_3$, $Na_2S_2O_5$, or $Na_2S_2O_8$.

In exemplary embodiments, the surface portion of the lithium metal oxide particles may exhibit a sulfur (S) concentration gradient. For example, the surface portion of the lithium metal oxide particles may be defined as a region in which sulfur exhibits a concentration gradient.

In exemplary embodiments, the absolute value of the slope of the sulfur (S) signal obtained by X-ray photoelectron spectroscopy (XPS) in the surface portion may be in a range of 20 cps/nm to 80 cps/nm, 25 cps/nm to 75 cps/nm, 30 cps/nm to 70 cps/nm, 35 cps/nm to 60 cps/nm, or 38 cps/nm to 50 cps/nm. If the absolute value of the signal slope exceeds 80 cps/nm, reactions may occur unevenly within the cathode, thereby reducing the cycle life of the secondary battery. If the absolute value of the signal slope is less than 20 cps/nm, the diffusivity of lithium (Li) ions may decrease, thereby reducing the output characteristics of the secondary battery. Accordingly, within the above range, the cycle life characteristics may be improved without degrading the output characteristics of the secondary battery.

The absolute value of the slope of the sulfur (S) XPS signal may be calculated using X-ray photoelectron

spectroscopy (XPS). For example, GENESIS equipment manufactured by Ulvac-PHI may be used.

In exemplary embodiments, no sodium (Na) concentration gradient may be present on the surface or inside the lithium metal oxide particles. For example, the sodium-containing compound may be uniformly distributed inside the lithium metal oxide particles. For example, the concentration of the sodium-containing compound on the surface of the lithium metal oxide particles and the concentration of the sodium-containing compound inside the lithium metal oxide particles may be substantially uniform. Accordingly, the conductivity of lithium (Li) ions may be sufficiently improved even within the lithium metal oxide particles.

In one embodiment, the concentration distribution of the sodium-containing compound may be determined through an X-ray photoelectron spectroscopy (XPS) signal (cps) of sodium according to the depth inside the lithium metal oxide particles based on the surface of the lithium metal oxide particles. For example, the coefficient of variation (CV) of the sodium XPS signal may be 0.15 or less. The CV may represent, for example, a value obtained by dividing the standard deviation of the sodium XPS signals by the arithmetic mean of the sodium XPS signals.

The sodium concentration gradient within the lithium metal oxide particles may be analyzed using X-ray photoelectron spectroscopy (XPS). For example, GENESIS equipment manufactured by Ulvac-PHI may be used.

In exemplary embodiments, the sulfur (S) content of the lithium metal oxide particles may be 2,500 ppm to 5,000 ppm, 2,800 ppm to 4,500 ppm, 3,000 ppm to 4,000 ppm, or 3,200 ppm to 3,500 ppm. Within this range, the cycle life characteristics and initial capacity of the secondary battery may be further improved.

The sulfur content of the lithium metal oxide particles may be measured using a carbon/sulfur (C/S) analyzer. For example, the CS844 model from LECO may be used.

In exemplary embodiments, the sodium (Na) content of the lithium metal oxide particles may be in the range of 150 ppm to 600 ppm, 200 ppm to 500 ppm, 250 ppm to 450 ppm, 280 ppm to 400 ppm, or 300 ppm to 350 ppm. Within this range, the capacity characteristics and rate characteristics of the secondary battery may be further improved.

In exemplary embodiments, the lithium metal oxide particles may further include tungsten (W). For example, the tungsten content of the lithium metal oxide particles may be 3,000 ppm to 5,000 ppm, 3,500 ppm to 4,500 ppm, 3,800 ppm to 4,200 ppm, or 3,850 ppm to 4,000 ppm. Within this range, the electrical conductivity and structural stability of the secondary battery may be improved.

The sodium and tungsten contents of the lithium metal oxide particles may be measured using inductively coupled plasma optical emission spectroscopy (ICP-OES). For example, Agilent's 5800 system may be used.

In exemplary embodiments, the lithium metal oxide particles may contain residual lithium at 3,000 ppm, 2,500 ppm, or 2,200 ppm or less. The residual lithium may be a compound such as $Li_2CO_3$ or LiOH. Within this range, degradation of the cycle life and capacity characteristics of the secondary battery may be prevented.

In exemplary embodiments, the lithium metal oxide particles may have a median particle diameter ($D_{50}$) 9.0 μm to 13.0 μm, 10.0 μm to 12.5 μm, or 10.5 μm to 12.0 μm. Within this range, the capacity characteristics of the secondary battery may be further improved.

The median particle diameter ($D_{50}$) may refer to the maximum particle diameter at a 50% volume fraction in the cumulative particle size distribution. The particle size of the cathode active material may be measured using a scanning electron microscope (SEM), transmission electron microscope (TEM), light scattering method, or laser diffraction method. For example, the particle size distribution of the cathode active material may be measured using a laser diffraction particle size analyzer after dispersing the cathode active material in a dispersion medium.

In exemplary embodiments, the lithium metal oxide particles may have a particle size distribution width (SPAN) of 0.9 to 1.5, 0.9 to 1.3, 1.0 to 1.25, or 1.05 to 1.2. Within this range, the diffusion path of lithium ions within the electrode may be optimized, and the structural stability of the electrode may be improved. The SPAN may be defined, for example, by Equation 1 below.

[Equation 1]

$$SPAN = (D_{90} - D_{10}) / D_{50}$$

In Equation 1, $D_{10}$ denotes the longest particle diameter at a volume fraction of 10% in the cumulative particle size distribution, $D_{50}$ denotes the longest particle diameter at a volume fraction of 50% in the cumulative particle size distribution, and $D_{90}$ denotes the longest particle diameter at a volume fraction of 90% in the cumulative particle size distribution.

The lithium metal oxide particles may be, for example, lithium-nickel metal oxide particles. The lithium-nickel metal oxide particles may further include at least one of cobalt (Co), manganese (Mn) and aluminum (Al).

In some embodiments, the cathode active material or the lithium-nickel metal oxide particles may include a layered structure or a crystal structure represented by Formula 3 below.

[Formula 3] $Li_xNi_{1-a}M_aO_2+_y$

In Formula 3, M may include at least one element selected from the group consisting of Co, Mn, Na, Mg, Ca, Y, Ti, Hf, V, Nb, Ta, Cr, Mo, W, Fe, Cu, Ag, Zn, B, Al, Ga, C, Si, Sn, Sr, Ba, Ra, P and Zr, and x, a and y may satisfy $0.98 < x < 1.03$, $0.02 \leq a \leq 0.4$, and $-0.5 \leq y \leq 0.1$.

The chemical structure represented by Formula 3 indicates a bonding relationship among elements included in the layered structure or the crystal structure of the cathode active material, and does not exclude the presence of additional elements. For example, M includes Co and/or Mn, and Co and/or Mn may be provided as main active elements of the cathode active material together with Ni. Here, it should be understood that Formula 3 is provided to express the bonding relationship between the main active elements, and is a formula encompassing the introduction and substitution of additional elements.

In one embodiment, the cathode active material may further include auxiliary elements which are added to the main active elements, in order to enhance chemical stability thereof or the layered structure/crystal structure. The auxiliary element may be incorporated into the layered structure/crystal structure together with the main active elements to form bonds, and it should be understood that this case is also included within the chemical structure range represented by Formula 3.

The auxiliary element may include, for example, at least one of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P and Zr.

The auxiliary element may serve as an auxiliary active element that contributes to the capacity/output activity of the cathode active material together with Co or Mn, such as Al.

For example, the cathode active material or the lithium-nickel metal oxide may include a layered structure or a crystal structure represented by Formula 3-1 below.

[Formula 3-1] $Li_xNi_{1-a1-b1-c1}Co_{a1}Mn_{b1}M1_{c1}O_{2+y}$

In Formula 3-1, M1 may include at least one element selected from the group consisting of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P and Zr, and x, a, b1, c1 and y may satisfy $0.98 < x < 1.03$, $0.02 \leq a1 \leq 0.15$, $0 \leq b1 \leq 0.15$, $0 \leq c1 \leq 0.1$, and $-0.5 \leq y \leq 0.1$.

The cathode active material may further include a coating element or a doping element. For example, elements which are substantially the same as or similar to the above-described auxiliary elements may be used as the coating element or the doping element. For example, the above-described elements may be used alone or in combination of two or more thereof as the coating element or the doping element.

The coating element or the doping element may be present on the surface of the lithium-nickel metal oxide particles, or may penetrate through the surface of the lithium-nickel metal oxide particles to be incorporated into the bonding structure represented by Formula 3 or Formula 3-1 above.

The cathode active material may include a nickel-cobalt-manganese (NCM)-based lithium oxide. In this case, an NCM-based lithium oxide with an increased content of nickel may be used.

Nickel (Ni) may serve as a transition metal associated with the output and capacity of the lithium secondary battery. Therefore, as described above, by employing a high-nickel-content (high-Ni) composition in the cathode active material, a high-capacity cathode and a high-capacity lithium secondary battery may be provided.

In this regard, as the content of Ni increases, long-term storage stability and cycle life stability of the cathode or the secondary battery may be relatively reduced, and side reactions with the electrolyte may also increase. However, according to exemplary embodiments, by including Co, the cycle life stability and capacity retention characteristics may be improved by Mn, while electrical conductivity is maintained.

The content of Ni (e.g., the molar fraction of nickel based on the total molar amount of nickel, cobalt and manganese) in the NCM-based lithium oxide may be 0.6 or more, 0.7 or more, or 0.8 or more. In some embodiments, the content of Ni may be 0.8 to 0.95, 0.82 to 0.95, 0.83 to 0.95, 0.84 to 0.95, 0.85 to 0.95, or 0.88 to 0.95.

In some embodiments, the cathode active material may include a lithium cobalt oxide-based active material, a lithium manganese oxide-based active material, a lithium nickel oxide-based active material, or a lithium iron phosphate (LFP)-based active material (e.g., $LiFePO_4$).

In some embodiments, the cathode active material may include, for example, a manganese (Mn)-rich active material, a lithium (Li)-rich layered oxide (LLO)/over-lithiated oxide (OLO)-based active material, or a cobalt (Co)-less active material, which has a chemical structure or a crystal structure represented by Formula 4.

[Formula 4] $p[Li_2MnO_3]\cdot(1-p)[Li_qJO_2]$

In Formula 4, p and q may satisfy $0<p<1$, $0.9 \leq q \leq 1.2$, and J may include at least one element selected from Mn, Ni,

Co, Fe, Cr, V, Cu, Zn, Ti, Al, Mg and B.

According to exemplary embodiments, the above-described cathode active material may be prepared by the following process.

According to exemplary embodiments, active metal salts may be prepared. The active metal salts may include nickel salts, manganese salts, and cobalt salts.

Examples of the nickel salts may include nickel sulfate ($NiSO_4$), nickel hydroxide ($Ni(OH)_2$), nickel nitrate ($Ni(NO_3)_2$), nickel acetate ($Ni(CH_3CO_2)_2$), or a hydrate thereof.

Examples of the manganese salts may include manganese sulfate ($MnSO_4$), manganese hydroxide ($Mn(OH)_2$), manganese nitrate ($Mn(NO_3)_2$), manganese acetate ($Mn(CH_3CO_2)_2$), or a hydrate thereof.

Examples of the cobalt salts include cobalt sulfate ($CoSO_4$), cobalt hydroxide ($Co(OH)_2$), cobalt nitrate ($Co(NO_3)_2$), cobalt carbonate ($CoCO_3$), or a hydrate thereof.

In one embodiment, nickel sulfate, manganese sulfate, and cobalt sulfate may be used as the nickel salt, manganese salt, and cobalt salt, respectively.

For example, a transition metal solution including the above-described active material metal salts may be formed. According to exemplary embodiments, when preparing the transition metal solution, for example, ammonium hydroxide ($NH_3 \cdot H_2O$) may be used to adjust the pH to 10 or more, for example, within a range of 10 to 12.

According to exemplary embodiments, the above-described active material metal salts may be mixed and reacted, for example, by a coprecipitation method, to obtain an active material precursor. For example, the active material precursor may be prepared in the form of nickel-manganese-cobalt hydroxide.

To promote the coprecipitation reaction, a precipitant and/or a chelating agent may be used. The precipitant may include an alkaline compound, such as sodium hydroxide (NaOH) or sodium carbonate ($Na_2CO_3$). The chelating agent may include, for example, ammonium hydroxide (e.g., $NH_3 \cdot H_2O$) or ammonium carbonate (e.g., $(NH_4)_2CO_3$).

For example, the precipitant may be added to the transition metal solution and reacted at a temperature ranging from about 50°C to 70°C. In one embodiment, the molar ratio of the precipitant (e.g., NaOH) to the molar amount of transition metals contained in the transition metal solution may be greater than 1 and less than 3, for example, 1.4 to 2.5.

In some embodiments, the precipitated reactant may be heat-treated to obtain a cathode active material precursor. For example, heat treatment at a temperature of about 100 °C to 150 °C for 10 hours to 30 hours may form a cathode active material precursor with a stabilized crystal structure. Preferably, the heat treatment temperature may be about 100 °C to 130 °C, and the heat treatment time may be 10 hours to 20 hours.

In exemplary embodiments, the above-described cathode active material precursor may be prepared by first forming a seed and then growing the seed.

In some embodiments, the seed may have a median particle diameter ($D_{50}$) of 1 μm to 7 μm, 2 μm to 6 μm, or 3 μm to 6 μm.

In some embodiments, the cathode active material precursor may have a median particle diameter ($D_{50}$) of 9.0 μm to 13.0 μm, 10.0 μm to 12.5 μm, or 10.5 μm to 12.0 μm.

The median particle diameter ($D_{50}$) may refer to the maximum particle diameter at a 50% volume fraction in the cumulative particle size distribution. The particle diameter of the seed and/or cathode active material precursor may be measured using a scanning electron microscope (SEM), transmission electron microscope (TEM), light scattering method, or laser diffraction method. For example, the particle size distribution of the seed and/or cathode active material precursor may be measured using a laser diffraction particle size analyzer after dispersing the seed and/or cathode active material precursor in a dispersion medium.

In exemplary embodiments, the active material precursor may be reacted with a lithium source.

The lithium source may include, for example, lithium carbonate ($Li_2CO_3$), lithium nitrate ($LiNO_3$), lithium acetate ($CH_3COOLi$), lithium oxide ($Li_2O$), or lithium hydroxide (LiOH). These may be used alone or in combination of two or more thereof. In one embodiment, lithium hydroxide may be used as the lithium source.

In exemplary embodiments, the active material precursor may be mixed with a lithium source, and a lithium metal oxide particle precursor serving as a cathode active material may then be prepared through a primary calcination process in a roller hearth kiln (RHK). For example, the primary calcination temperature may range from 600 °C to 900 °C, 650 °C to 800 °C, or 700 °C to 750 °C. For example, the calcination time may range from 6 to 18 hours, 7 to 15 hours, or 8 hours to 12 hours.

In exemplary embodiments, a cleaning process may not be performed after the calcination process. Accordingly, sodium-containing compounds may be included within the cathode active material, thereby preventing degradation of the cycle life and capacity characteristics of the secondary battery.

In exemplary embodiments, a coating process may be performed on the lithium metal oxide particle precursor produced as the cathode active material. For example, the coating process may be a semi-dry coating process.

For example, a pre-coating process may be performed to coat the lithium metal oxide particle precursor. The pre-coating process may be, for example, a process of uniformly mixing the lithium metal oxide particle precursor, a sulfur (S)-containing coating material, and a tungsten (W)-containing coating material through high-speed stirring.

In some embodiments, the sulfur-containing coating material may have a structure represented by Formula 5 below.

[Formula 5]

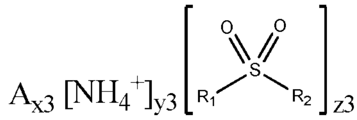

In Formula 5, x3, y3 and z3 may satisfy x3≥0, y3≥0, and z3>0, A includes Al, Ti, Zr, W, Sr, Ba, Ta, Nb, Mo, K, Na, or H, $R_1$ and $R_2$ may be hydrocarbon groups having 1 to 3 carbon atoms that can be substituted with O-, $NH_2$, $NH_3^+$, OH, or a substituent, and the substituent may include a halogen, a cyano group, a hydroxyl group, a phosphoric acid group, a carboxyl group, or a salt thereof.

For example, the sulfur-containing coating material may include $(NH_4)_2SO_4$, $SO_3NH_3$, $NH_4SO_3NH_2$, $Al_2(SO_4)_3$, $AlK(SO_4)_2$, $Al(NH_4)(SO_4)_2$, $Ti(SO_4)_2$, or $TiOSO_4$, $SrSO_4$.

The tungsten-containing coating material may include, for example, $WO_3$, SrWO4, (NH4)10H2(W2O7)6, or H4 [W12SiO40].

In exemplary embodiments, the content of the sulfur-containing coating material may be 2,500 ppm to 4,500 ppm. Within this range, a suitable sulfur concentration gradient range may be achieved.

After the pre-coating process, the pre-coated lithium metal oxide particle precursor may be introduced into a dryer and stirred for 3 hours to 5 hours, or 3.5 hours to 4.5 hours, while a small amount of water is introduced to carry out the coating process. The water may be introduced, for example, in an amount of 12% by weight ("wt%") or less, or 10 wt% or less, based on the total weight of the pre-coated lithium metal oxide particle precursor. Within this range, the temperature inside the dryer may be properly maintained, enabling the coating process to proceed smoothly.

In some embodiments, the time required for introducing the water may be 10 minutes to 45 minutes, 12 minutes to 40 minutes, or 15 minutes to 30 minutes. Within this range, the water may be prevented from evaporating immediately after being introduced, while also preventing the temperature inside the dryer from dropping below an appropriate level, so that the coating process may be smoothly carried out. Accordingly, the sulfur content of the lithium-nickel metal oxide particles may be maintained within an appropriate range, the XPS signal slope of sulfur may be maintained within an appropriate range, and the amount of residual lithium may be reduced.

For example, based on a dryer capable of accommodating approximately 50 kg of the pre-coated lithium metal oxide particle precursor, the rate of water introduction may be 0.08 kg/min to 0.45 kg/min, 0.1 kg/min to 0.4 kg/min, 0.12 kg/min to 0.35 kg/min, or 0.15 kg/min to 0.3 kg/min.

In some embodiments, the temperature inside the dryer may be 100 °C to 250 °C, or 150 °C to 200 °C. Within this range, the water may be prevented from evaporating immediately after being added, thereby allowing the coating process to be smoothly carried out. Accordingly, the sulfur content of the lithium-nickel metal oxide particles may be maintained within an appropriate range, the XPS signal slope of sulfur may be maintained within an appropriate range, and the amount of residual lithium may be reduced.

In some embodiments, the dryer may have various shapes, such as conical, cylindrical, horizontal, or vertical.

After the coating process, a secondary calcination process may be performed in a roller hearth kiln. The secondary calcination temperature may be, for example, greater than 250 °C and less than 500 °C, 300 °C to 450 °C, or 350 °C to 400 °C. For example, the calcination time may be 4 hours to 16 hours, 5 hours to 13 hours, or 6 hours to 10 hours. Within this range, the sulfur concentration gradient may be appropriate.

After the secondary calcination process, a de-ironing and classification (through a 325 mesh sieve) process may be performed.

Hereinafter, a lithium secondary battery including the above-described cathode active material according to the embodiments will be described.

FIGS. 1 and 2 are schematic plan and cross-sectional views, respectively, illustrating the lithium secondary battery according to exemplary embodiments. FIG. 2 is a cross-sectional view taken along line I-I' in FIG. 1.

Referring to FIGS. 1 and 2, the lithium secondary battery may include an electrode assembly including a cathode 100, an anode 130, and a separator 140 interposed between the cathode and the anode. The electrode assembly may be accommodated in a case 160 together with an electrolyte to be impregnated.

The cathode 100 may include a cathode active material layer 110 formed by applying the above-described cathode active material to a cathode current collector 105.

**For** example, the cathode current collector 105 may include stainless steel, nickel, aluminum, titanium, or an

alloy thereof. The cathode current collector may also include aluminum or stainless steel having a surface treated with carbon, nickel, titanium or silver. For example, the cathode current collector 105 may have a thickness of 10 μm to 50 μm.

For example, a cathode slurry may be prepared by mixing the cathode active material in a solvent. The cathode slurry may be coated onto the cathode current collector 105, followed by drying and roll-pressing, to prepare the cathode active material layer 110. The coating process may be performed using methods such as gravure coating, slot die coating, simultaneous multilayer die coating, imprinting, doctor blade coating, dip coating, bar coating, casting or the like. The cathode slurry may further include a binder and a conductive material.

Non-limiting examples of the solvent used in the preparation of the cathode slurry may include N-methyl-2-pyrrolidone (NMP), dimethylformamide, dimethylacetamide, N,N-dimethylaminopropylamine, ethylene oxide, tetrahydrofuran or the like.

The binder may include polyvinylidene fluoride (PVDF), poly(vinylidene fluoride-co-hexafluoropropylene), polyacrylonitrile, polymethyl methacrylate, acrylonitrile butadiene rubber (NBR), polybutadiene rubber (BR), styrene-butadiene rubber (SBR), a polyacrylic acid-based binder, a poly(3,4-ethylenedioxythiophene, PEDOT)-based binder and the like. In some embodiments, a PVDF-based binder may be used as the cathode binder.

The conductive material may be added to enhance the conductivity and/or the mobility of lithium ions or electrons. For example, non-limiting examples of the conductive material may include carbon-based conductive materials such as graphite, carbon black, acetylene black, Ketjen black, graphene, carbon nanotubes (CNTs), vapor-grown carbon fibers (VGCF), and carbon fibers; and/or metal-based conductive materials such as tin, tin oxide, and titanium oxide; and perovskite materials such as $LaSrCoO_3$, and $LaSrMnO_3$.

The anode 130 may include an anode current collector 125 and an anode active material layer 120 including an anode active material and formed on the anode current collector 125.

The anode 130 may include the anode current collector 125 and the anode active material layer 120 formed by coating an anode active material on at least one surface of the anode current collector 125.

Non-limiting examples of the anode current collector 125 may include a copper foil, a nickel foil, a stainless steel foil, a titanium foil, a nickel foam, a copper foam, a polymer substrate coated with a conductive metal and the like. The anode current collector 125 may have, for example, a thickness of 10 μm to 50 μm.

As the anode active material, any material known in the related art, so long as it can absorb and desorb lithium ions, may be used without particular limitation thereof. For example, carbon-based materials such as crystalline carbon, amorphous carbon, carbon composite, carbon fibers, etc., a lithium alloy, a silicon-containing material, or a tin-containing material may be used.

Examples of the amorphous carbon may include hard carbon, soft carbon, coke, mesocarbon microbead (MCMB), mesophase pitch-based carbon fiber (MPCF) or the like.

Examples of the crystalline carbon may include graphite-based carbon such as natural graphite, artificial graphite, graphitized coke, graphitized MCMB, graphitized MPCF or the like

The lithium metal may include pure lithium metal or lithium metal having a protective layer formed thereon for suppressing dendrite growth, etc. In one embodiment, a lithium metal-containing layer deposited or coated onto the anode current collector may be used as the anode active material layer. In one embodiment, a lithium thin film layer may be used as the anode active material layer.

Elements included in the lithium alloy may include aluminum, zinc, bismuth, cadmium, antimony, silicon, lead, tin, gallium or indium, etc.

The silicon-containing material may provide further increased capacity characteristics. The silicon-containing material may include Si, SiOx ($0<x<2$), a metal-doped SiOx ($0<x<2$), a silicon-carbon composite, etc. The metal may include lithium and/or magnesium, and the metal-doped SiOx ($0<x<2$) may include a metal silicate.

In some embodiments, an anode slurry may be prepared by mixing and stirring the anode active material with a binder, a conductive material and/or a dispersant in a solvent. The anode slurry may be coated onto at least one surface of the anode current collector, and then dried and roll-pressed to prepare the anode 130.

As the binder and conductive material, materials substantially the same as or similar to the binder and conductive material included in the cathode may be used. In some embodiments, as the anode binder, a styrene-butadiene rubber (SBR)-based binder, carboxymethyl cellulose (CMC), polyacrylic acid-based binder, poly(3,4-ethylenedioxythiophene, PEDOT)-based binder, and the like may be used.

The separator 140 may include a porous polymer film or a porous nonwoven fabric. The porous polymer film may include a polyolefin-based polymer such as an ethylene polymer, a propylene polymer, an ethylene/butene copolymer, an ethylene/hexene copolymer, an ethylene/methacrylate copolymer and the like. The porous nonwoven fabric may include glass fibers having a high melting point, polyethylene terephthalate fibers and the like. The separator 140 may also include a ceramic-based material. For example, inorganic particles may be coated onto the polymer film or dispersed within the polymer film to improve heat resistance.

According to exemplary embodiments, an electrode cell may be defined by the cathode 100, the anode 130 and the separator 140, and a plurality of electrode cells may be stacked to form, for example, a jelly roll type electrode assembly

150. For example, the electrode assembly 150 may be a winding type, a stacking type, a z-folding type, or a stacked-folding type.

The electrode assembly 150 may be accommodated in the case 160 together with the electrolyte to define a lithium secondary battery. According to exemplary embodiments, a non-aqueous electrolyte may be used as the electrolyte.

The non-aqueous electrolyte may include a lithium salt of an electrolyte and an organic solvent, the lithium salt is represented by, for example, $Li^+X^-$, and as an anion ($X^-$) of the lithium salt, $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$, etc. may be exemplified.

As the organic solvent, for example, propylene carbonate (PC), ethylene carbonate (EC), diethyl carbonate (DEC), dimethyl carbonate (DMC), ethyl methyl carbonate (EMC), methyl propyl carbonate, dipropyl carbonate, dimethyl sulfoxide (DMSO), acetonitrile, dimethoxyethane, diethoxyethane, vinylene carbonate, sulfolane, $\gamma$-butyrolactone, propylene sulfite, tetrahydrofuran, and the like may be used. These compounds may be used alone or in combination of two or more thereof.

In some embodiments, a solid electrolyte may be used in place of the above-described non-aqueous electrolyte. In this case, the lithium secondary battery may be manufactured in the form of an all-solid-state battery. In addition, a solid electrolyte layer may be disposed between the cathode and the anode in place of the above-described separator.

The solid electrolyte may include a sulfide-based electrolyte. As a non-limiting example, the sulfide-based electrolyte may include $Li_2S-P_2S_5$, $Li_2S-P_2S_5-LiCl$, $Li_2S-P_2S_5-LiBr$, $Li_2S-P_2S_5-LiCl-LiBr$, $Li_2S-P_2S_5-Li2O$, $Li_2S-P_2S_5-Li_2O-LiI$, $Li_2S-SiS_2$, $Li_2S-SiS_2-LiI$, $Li_2S-SiS_2-LiBr$, $Li_2S-SiS_2-LiCl$, $Li_2S-SiS_2-B_2S_3-LiI$, $Li_2S-SiS_2-P_2S_5-LiI$, $Li_2S-B_2S_3$, $Li_2S-P_2S_3-Z_mS_n$ (m and n are positive numbers, Z is Ge, Zn or Ga), $Li_2S-GeS_2$, $Li_2S-SiS_2-Li_3PO_4$, $Li_2S-SiS_2-Li_pMO_q$ (p and q are positive numbers, M is P, Si, Ge, B, Al, Ga or In), $Li_{7-x}PS_{6-x}Cl_x$ ($0\leq x\leq 2$), $Li_{7-x}PS_{6-x}Br_x$ ($0\leq x\leq 2$), $Li_{7-x}PS_{6-x}I_x$ ($0\leq x\leq 2$), etc. These may be used alone or in combination of two or more thereof.

In one embodiment, the solid electrolyte may include an oxide-based amorphous solid electrolyte, such as, for example, $Li_2O-B_2O_3-P_2O_5$, $Li_2O-SiO_2$, $Li_2O-B_2O_3$, $Li_2O-B_2O_3-ZnO$, etc.

As shown in FIG. 1, electrode tabs (cathode tabs and anode tabs) may protrude from each cathode current collector 105 and each anode current collector 125, respectively, which belong to each electrode cell, and may extend to one end portion of the case 160. The electrode tabs may be welded together with the one end portion of the case 160 to be connected with electrode leads (a cathode lead 107 and an anode lead 127) that extend or are exposed to the outside of the case 160.

In FIG. 1, the cathode lead 107 and the anode lead 127 are shown to protrude from an upper side of the case 160 in a planar direction, but positions of these electrode leads are not limited thereto. For example, the electrode leads may protrude from at least one of both sides of the case 160, or may protrude from a lower side of the case 160. Alternatively, the cathode lead 107 and the anode lead 127 may be formed to protrude from different sides of the case 160, respectively.

The lithium secondary battery may be manufactured, for example, in a cylindrical shape using a can, a prismatic shape, a pouch shape or a coin shape.

The invention relates also to the following numbered aspects:

Aspect 1. A cathode active material for a lithium secondary battery, comprising: lithium metal oxide particles; and

> **a** sulfur (S)-containing compound and a sodium (Na)-containing compound present on the surface or inside the lithium metal oxide particles,
> wherein a surface portion of the lithium metal oxide particles have a sulfur (S) concentration gradient, and
> the absolute value of the slope of the sulfur (S) XPS signal in the surface portion is 20 cps/nm to 80 cps/nm.

Aspect 2. The cathode active material for a lithium secondary battery according to aspect 1, wherein the sulfur-containing compound is distributed in the surface portion, preferably the surface portion corresponds to a depth of 200 nm or less from the surface of the lithium metal oxide particles.

Aspect 3. The cathode active material for a lithium secondary battery according to aspect 1 or 2, wherein the sulfur-containing compound has a structure represented by Formula 1 below, preferably the sulfur-containing compound comprises at least one selected from the group consisting of lithium sulfate ($Li_2SO_4$), lithium sulfate monohydrate ($Li_2SO_4 \cdot H_2O$), lithium ammonium sulfate ($Li(NH_4)SO_4$), lithium hydroxylammonium sulfate ($Li(NH_3)(OH)SO_4$), lithium hydrogen sulfate ($LiHSO_4$), and lithium sulfide ($Li_2S$):

[Formula 1] $$Li_{x1}(NH_4)_{y1}(NH_3)_{z1}H_{w1}(OH)_{v1}S_{u1}O_{t1}$$

(in Formula 1, $0\leq x1\leq 2$, $0\leq y1\leq 1$, $0\leq z1\leq 1$, $0\leq w1\leq 1$, $0\leq v1\leq 1$, $0<u1\leq 1$, and $0\leq t1\leq 4$).

Aspect 4. The cathode active material for a lithium secondary battery according to any one of aspects 1 to 3, wherein no sodium (Na) concentration gradient is present on the surface or inside the lithium metal oxide particles.
Aspect 5. The cathode active material for a lithium secondary battery according to any one of aspects 1 to 4, wherein the sodium-containing compound has a structure represented by Formula 2 below, preferably the sodium-containing compound comprises at least one selected from the group consisting of $LiNaSO_4$, $Na_2SO_4$, $NaHSO_4$, $Na_2S_2O_3$, $Na_2S_2O_5$, and $Na_2S_2O_8$:

[Formula 2] $Li_{x2}Na_{y2}H_{z2}S_{w2}O_{v2}$

(in Formula 2, $0 \leq x2 \leq 1$, $0 < y2 \leq 2$, $0 \leq z2 \leq 1$, $0 \leq w2 \leq 2$, and $0 \leq v2 \leq 8$).
Aspect 6. The cathode active material for a lithium secondary battery according to any one of aspects 1 to 5, wherein the sulfur content of the lithium metal oxide particles is 2,500 ppm to 5,000 ppm.
Aspect 7. The cathode active material for a lithium secondary battery according to any one of aspects 1 to 6, wherein the sodium content of the lithium metal oxide particles is 150 ppm to 600 ppm.
Aspect 8. The cathode active material for a lithium secondary battery according to any one of aspects 1 to 7, wherein the lithium metal oxide particles further comprise tungsten, and
the tungsten content of the lithium metal oxide particles is 3,000 ppm to 5,000 ppm.
Aspect 9. The cathode active material for a lithium secondary battery according to any one of aspects 1 to 8, wherein the residual lithium content of the lithium metal oxide particles is 4,000 ppm or less, preferably the residual lithium comprises at least one compound of $Li_2CO_3$ or LiOH.
Aspect 10. The cathode active material for a lithium secondary battery according to any one of aspects 1 to 9, wherein the lithium metal oxide particles have a median particle diameter ($D_{50}$) of 9.0 μm to 13.0 μm, and
the median particle diameter is the longest diameter of the particles at a volume fraction of 50% in a cumulative particle size distribution.
Aspect 11. The cathode active material for a lithium secondary battery according to any one of aspects 1 to 10, wherein the lithium metal oxide particles have a particle size distribution width (SPAN) of 0.9 to 1.5, and
the SPAN is defined by Equation 1 below:

[Equation 1]

$$SPAN=(D_{90} - D_{10})/D_{50}$$

(in Equation 1, $D_{10}$ denotes the longest particle diameter at a volume fraction of 10% in the cumulative particle size distribution, $D_{50}$ denotes the longest particle diameter at a volume fraction of 50% in the cumulative particle size distribution, and $D_{90}$ denotes the longest particle diameter at a volume fraction of 90% in the cumulative particle size distribution).
Aspect 12. A method for preparing a cathode active material for a lithium secondary battery, the method comprising:

mixing and coprecipitating metal salts of active material components to obtain an active material precursor;
mixing the active material precursor with a lithium source and performing primary calcination to obtain a lithium metal oxide particle precursor;
pre-coating the lithium metal oxide particle precursor with a sulfur-containing coating material;
drying the pre-coated lithium metal oxide particle precursor in a dryer maintained at an internal temperature of 100 °C to 250 °C; and
performing secondary calcination of the dried, pre-coated lithium metal oxide particle precursor at a temperature greater than 250 °C and less than 500 °C.

Aspect 13. The method according to aspect 12, wherein in the drying step, the drying is performed while introducing water into the dryer, preferably the amount of water introduced into the dryer is 12% by weight or less based on the total weight of the pre-coated lithium metal oxide particle precursor.
Aspect 14. The method according to aspect 13, wherein the time required for introducing water into the dryer is 10 to 45 minutes.
Aspect 15. A lithium secondary battery comprising:

a cathode comprising the cathode active material according to any one of aspects 1 to 11;
an anode disposed opposite the cathode; and
a separator interposed between the cathode and the anode.

## Preparation of precursor

### 1) Preparation of Precursor 1

In a batch reactor, a 2 M metal solution was prepared by dissolving a nickel source ($NiSO_4$), a cobalt source ($CoSO_4$), and a manganese source ($MnSO_4$) in a composition ratio of 88:9:3. The metal solution was introduced into the reactor at a rate of 400 ± 10 L/h. An $NH_3H_2O$ solution was added to maintain the $NH_3$ concentration in the reactor at 2.5 to 3.75 g/L, and the mixture was stirred to form seeds having a diameter of 3 to 4 μm (stirring speed: 40 to 48 Hz). During the addition of the $NH_3H_2O$ solution, NaOH was simultaneously added to maintain the pH at 11.00 ± 0.3, while the temperature was maintained at 55 ± 1 °C.

Thereafter, the seeds were introduced into a continuous stirred-tank reactor (CSTR), and a 2 M metal solution containing $NiSO_4$, $CoSO_4$, and $MnSO_4$ in a ratio of 88:9:3 was prepared and fed into the reactor at a rate of 650 ± 10 L/h. An $NH_3H_2O$ solution was added to maintain the $NH_3$ concentration within the reactor at 2 to 2.5 g/L, thereby allowing the seeds to grow. During the seed growth, the stirring speed of the CSTR was maintained at 22 Hz, the pH at 10.9 ± 0.1, and the temperature at 75 ± 1 °C.

After approximately 120 hours, washing, dehydration, and heat-treatment processes were sequentially carried out to prepare the precursor. The dehydration process was performed using a filter press, and the heat-treatment process was conducted in an oven at 120 °C for 10 hours.

### 2) Preparation of Precursor 2

The precursor was prepared in the same manner as Precursor 1, except that seeds having a diameter of 5 to 6 μm were used.

### 3) Preparation of Precursor 3

The precursor was prepared in the same manner as Precursor 1, except that the washing and dehydration processes were each performed twice.

### 4) Preparation of Precursor 4

The precursor was prepared in the same manner as Precursor 1, except that during seed growth, the pH was maintained at 11.3 ± 0.1 and the temperature was maintained at 60 ± 1 °C.

## Examples and Comparative Examples

### Example 1

### 1) Preparation of cathode active material

Precursor 1 prepared above and LiOH as a lithium source were introduced into a roller hearth kiln (RHK) and subjected to primary calcination at 700°C to 750°C for 8 hours to 12 hours.

After the primary calcination, $(NH_4)_2SO_4$ and $WO_3$ were added as coating agents, and a pre-coating process was performed by high-speed stirring to prepare 50 kg of preliminary cathode active material.

After the pre-coating, the preliminary cathode active material was placed in a dryer and stirred, while 3.5 kg of water was introduced at a rate of 0.2 kg/min for 17.5 minutes. During this process, the temperature inside the dryer was maintained at 160 °C, and stirring of the preliminary cathode active material was continued for 4 hours.

After stirring, the discharged product was subjected to secondary calcination at 350 °C in a roller hearth kiln, followed by de-ironing and classification through a 325-mesh sieve, to obtain 40 kg of cathode active material.

### 2) Manufacture of half-cell

The cathode active material, Denka Black as a conductive material, and PVDF as a binder were mixed in a mass ratio of 93:5:2 to prepare a cathode slurry. The cathode slurry was then coated onto an aluminum current collector, followed by drying and roll-pressing to fabricate a cathode. After pressing, the target electrode density of the cathode was adjusted to 3.0 g/cc.

A lithium half-cell was fabricated using lithium metal as the counter electrode (anode).

Specifically, a separator (polyethylene, thickness: 13 μm) was interposed between the fabricated cathode and

lithium metal (thickness: 20 μm) to form a lithium coin half-cell.

The cathode/separator/lithium metal assembly was placed in a coin cell plate, followed by electrolyte injection, capping, and clamping. A solution, prepared by dissolving 1 M $LiPF_6$ in a mixture of EC/EMC (3:7, volume ratio) and adding 2.0 vol% FEC based on the total electrolyte volume, was used as the electrolyte.

## Example 2

The cathode active material and half-cell were manufactured in the same manner as in Example 1, except that the secondary calcination was performed at 400 °C instead of 350 °C.

## Example 3

A cathode active material and a half-cell were manufactured in the same manner as in Example 1, except that the secondary calcination was performed at 300 °C instead of 350 °C.

## Example 4

A cathode active material and a half-cell were manufactured in the same manner as in Example 1, except that the secondary calcination was performed at 450 °C instead of 350 °C.

## Example 5

A cathode active material and a half-cell were manufactured in the same manner as in Example 1, except that Precursor 2 was used.

## Example 6

A cathode active material and a half-cell were manufactured in the same manner as in Example 1, except that Precursor 3 was used.

## Example 7

A cathode active material and a half-cell were manufactured in the same manner as in Example 1, except that Precursor 4 was used.

## Comparative Example 1

### 1) Preparation of cathode active material

Precursor 1 prepared above and LiOH as a lithium source were introduced into a roller hearth kiln (RHK) and subjected to primary calcination at 700°C to 750°C for 8 hours to 12 hours.

After the primary calcination, 50 kg of water was introduced and stirred for 30 minutes.

After stirring, moisture was removed using a filter press (moisture content: 2 wt% to 4 wt%).

Subsequently, moisture was further removed in a dryer maintained at 150°C to 200°C (moisture content: 0.5 wt% or less).

After moisture removal, secondary calcination was performed at 350 °C in a roller hearth kiln, followed by de-ironing and classification through a 325-mesh sieve, to obtain 40 kg of cathode active material.

### 2) Manufacture of half-cell

A half-cell was manufactured in the same manner as in Example 1, except that the cathode active material was used.

## Comparative Example 2

A cathode active material and a half-cell were manufactured in the same manner as in Comparative Example 1, except that $(NH_4)_2SO_4$ and $WO_3$ were added as coating agents after moisture removal and before secondary calcination, and mixed by high-speed stirring.

**Comparative Example 3**

**1) Preparation of cathode active material**

Precursor 1 prepared above and LiOH as a lithium source were introduced into a roller hearth kiln (RHK) and subjected to primary calcination at 700°C to 750°C for 8 hours to 12 hours.
**After** the primary calcination, $(NH_4)_2SO_4$ and $WO_3$ were added as coating agents and mixed by high-speed stirring.
**After** stirring, secondary calcination was performed 350°C in a roller hearth kiln, followed by de-ironing and classification through a 325 mesh sieve, to obtain 40 kg of cathode active material.

**2) Manufacture of half-cell**

A half cell was manufactured in the same manner as in Example 1, except that the cathode active material was used.

**Comparative Example 4**

Cathode active materials and half-cells were manufactured in the same manner as in Example 1, except that the secondary calcination was performed at 250°C instead of 350°C.

**Comparative Example 5**

A cathode active material and a half-cell were manufactured in the same manner as in Example 1, except that the secondary calcination was performed at 500 °C instead of 350 °C.

**Comparative Example 6**

A cathode active material and a half-cell were manufactured in the same manner as in Example 1, except that water was introduced at a rate of 0.5 kg/min instead of 0.2 kg/min for 7 minutes, and the temperature inside the dryer was maintained below 100 °C.

**Comparative Example 7**

A cathode active material and a half-cell were manufactured in the same manner as in Example 1, except that water was introduced at a rate of 0.07 kg/min instead of 0.2 kg/min for 50 minutes and the temperature inside the dryer was maintained above 250 °C.

**Measurement Example 1: Precursor**

**1) Measurement of sodium and sulfur content**

The contents of sulfur (S) and sodium (Na) were measured using an inductively coupled plasma optical emission spectrometer (ICP-OES, Model name: Agilent 5800, Agilent Technologies).

**2) Measurement of volume-based particle size distribution**

Each of Precursors 1 to 4 (0.1 g each) was introduced into distilled water using $NaPO_3$ as a dispersant. After ultrasonic dispersion of the distilled water, the laser diffraction particle size analyzer (Microtrac S3500 Bluewave) in absorbing mode was used to measure diffraction pattern differences according to particle size, thereby obtaining a volume-weighted particle size distribution curve.
From the volume-weighted particle size distribution curve, the particle diameters corresponding to 10%, 50%, and 90% of the cumulative volume fraction were measured three times to obtain $D_{10}$, $D_{50}$, and $D_{90}$, respectively.
The SPAN of the precursor was calculated from the obtained $D_{10}$, $D_{50}$, and $D_{90}$ values.
The sodium and sulfur contents, median particle diameter ($D_{50}$), and SPAN of the precursor are shown in Table 1 below.

[TABLE 1]

| Precursor | Sodium content (ppm) | Sulfur content (ppm) | $D_{50}$ (μm) | SPAN |
|---|---|---|---|---|
| Precursor 1 | 350 | 2050 | 11.3 | 1.1 |
| Precursor 2 | 300 | 2100 | 11.5 | 1.1 |
| Precursor 3 | 210 | 2010 | 11.5 | 1.1 |
| Precursor 4 | 540 | 1990 | 11.4 | 1.1 |

Referring to Table 1 above, the sodium content of Precursor 2, which was prepared using seeds having a relatively larger diameter, was lower than that of Precursor 1.

## Measurement Example 2: Cathode active material

### 1) Measurement of sulfur, tungsten, sodium, and $Li_2CO_3$ content

The cathode active materials (0.02 g to 0.04 g) of the examples and comparative examples were each placed in a ceramic crucible, and a combustion aid (LECOCEL II) and iron chips were added at a mass ratio of 1:1.

The ceramic crucible was placed in a high-frequency induction furnace, while oxygen was supplied at a flow rate of 3 L/min, and combustion was carried out at 2600 °C to 2700 °C. The sulfur-containing inorganic gas (e.g., $SO_2$ gas) generated during combustion was passed through an infrared detection cell, and the change in infrared absorbance compared to the blank was measured using a CS844 analyzer (LECO).

The sulfur (S) content in the cathode active materials of the examples and comparative examples was calculated as the sulfur amount based on the total weight of the lithium-transition metal oxide particles.

The contents of sodium (Na) and tungsten (W) in the cathode active materials of the examples and comparative examples were measured using an inductively coupled plasma optical emission spectrometer (ICP-OES, Model name: Agilent 5800, Agilent Technologies).

Each of the cathode active materials (1 g) of the examples and comparative examples was combusted, and the amount of $CO_2$ generated was measured using a CS844 analyzer (LECO) to calculate the carbon content of each cathode active material.

Considering the carbon content and the atomic weights of lithium (Li), carbon (C), and oxygen (O), the $Li_2CO_3$ content in the cathode active materials of the examples and comparative examples was calculated.

### 2) Measurement of sulfur concentration gradient slope

The sulfur concentration gradient slope was measured using X-ray photoelectron spectroscopy (XPS).

Specifically, the cathode active materials of the examples and comparative examples were attached to carbon tape, placed in an XPS chamber, and evacuated, after which measurements were performed using X-rays with a beam size of 100 μm.

The specific XPS depth sputtering conditions were as follows.

- XPS model: GENESIS (Ulvac-PHI)
- Sputter source: 4.00 kV $Ar^+$
- Sputter cycles: 31 times
- Sputter time: 1 min per cycle
- Scan range: C1s (278-298 eV), S2p (155-175 eV), Na1s (1066-1086 eV), W4f (26-46 eV)
- Pass energy: 224 eV

The analyzed elements were multiplied by their respective sensitivity factors to obtain the signal ratio as a function of sputtering time.

The sputtering rate for the $SiO_2$ standard sample was calculated to be 11.96 nm/min, and the signal ratio along the depth direction was used to determine the sulfur concentration gradient slope (cps/nm) for each of the examples and comparative examples.

The results are shown in Table 2 below.

[TABLE 2]

| | Sulfur concentration gradient slope (cps/nm) | Sulfur content (ppm) | Sodium content (ppm) | Tungsten content (ppm) | $Li_2SO_3$ content (ppm) |
|---|---|---|---|---|---|
| Example 1 | 47 | 3300 | 320 | 3920 | 2120 |
| Example 2 | 39 | 3210 | 330 | 3980 | 1670 |
| Example 3 | 76 | 3310 | 330 | 3970 | 2430 |
| Example 4 | 21 | 3240 | 290 | 3960 | 1450 |
| Example 5 | 45 | 3280 | 280 | 3890 | 2200 |
| Example 6 | 51 | 3320 | 190 | 3930 | 2090 |
| Example 7 | 55 | 3230 | 510 | 3970 | 2230 |
| Comparative Example 1 | No concentration gradient | 1990 | - | - | 840 |
| Comparative Example 2 | 18 | 2280 | - | 3880 | 980 |
| Comparative Example 3 | 19 | 2450 | 310 | 3970 | 4410 |
| Comparative Example 4 | 92 | 3250 | 340 | 3980 | 2880 |
| Comparative Example 5 | 10 | 3310 | 240 | 3920 | 1210 |
| Comparative Example 6 | 108 | 3290 | 320 | 3890 | 2090 |
| Comparative Example 7 | 11 | 2780 | 330 | 3920 | 3010 |

FIGS. 3 and 4 are graphs showing the XPS depth profile results for sulfur and sodium of Example 1, respectively.

Referring to FIG. 3, it can be seen that a concentration gradient of sulfur was observed from the surface of the active material to a depth of approximately 100 nm.

Referring to FIG. 4, it can be seen that a constant signal was observed within the active material, indicating no concentration gradient of sodium.

FIGS. 5 and 6 are graphs showing the XPS depth profile results for sulfur and sodium of Comparative Example 1, respectively.

Referring to FIG. 5, it can be seen that a constant signal was observed within the active material, indicating no concentration gradient of sulfur.

Referring to FIG. 6, only noise signals were detected within the active material, and sodium was not detected.

**Measurement Example 3: SEM and EDS images**

FIGS. 7 to 9 are the scanning-electron microscope-energy dispersive X-ray spectroscopy (SEM-EDS) results for the cross-section of the cathode active material of Example 1.

FIG. 7 is an SEM image for the cross-section of the cathode active material of Example 1.

FIG. 8 is an EDS image for sulfur in the active material of Example 1.

FIG. 9 is an EDS image for sodium in the active material of Example 1.

Specifically, the cathode active material sample of Example 1 was attached to a carbon tape and thoroughly blown with an air gun. The sample with the cathode active material attached was then mounted in the SEM, and after inserting the FlatQuad EDS equipment, the working distance (WD) was adjusted to 11 mm, and the focus and alignment were adjusted.

The magnification was set to 1,000×, and EDS mapping was performed for 300 seconds to acquire images.

The analysis was performed using scanning electron microscopy (SEM) and energy dispersive X-ray spectroscopy (EDS). For example, an Apreo 2S (Thermo Fisher Scientific) may be used as the SEM, and a FlatQuad (Bruker) may be used as the EDS.

The specific measurement conditions were as follows.

i) Accelerating voltage: 10 kV
ii) Beam current: 0.8 nA
iii) Detector: Everhart-Thornley Detector (ETD), FlatQuad EDS (FQ-EDS)
iv) Use case: Standard

v) Laboratory temperature: 20 ± 5 °C
vi) Laboratory relative humidity: ≤ 65%

Referring to FIGS. 7 to 9, it can be seen that sulfur (S) and sodium (Na) were present within the cathode active material of Example 1.

## Experimental Example 1

### 1) Discharge capacity (mAh/g)

The half-cells of the examples and comparative examples were charged (CC/CV 0.1 C, 4.3 V, 0.005 C cut-off) and discharged (CC 0.1 C, 3.0 V cut-off) in a 25 °C chamber, and the battery capacity (initial discharge capacity) was measured.

### 2) Rate characteristics (%)

After evaluating the initial discharge capacity in (1), the same cell was charged (CC/CV, 0.1 C, 4.3 V, 0.005 C cut-off) and discharged (CC, 4 C, 3.0 V cut-off) to measure the battery capacity (discharge capacity at 4 C).
The rate characteristics (%) were calculated as the percentage obtained by dividing the discharge capacity at 4 C by the initial discharge capacity.

### 3) Cycle life characteristics

After evaluating the initial discharge capacity in (1), the same cell was subjected to 300 charge and discharge cycles in a 45 °C chamber, under the conditions of charging (CC/CV, 0.5 C, 4.3 V, 0.05 C cut-off) and discharging (CC, 1.0 C, 2.5 V cut-off).
The capacity retention (%) was calculated as the percentage obtained by dividing the discharge capacity at the 300th cycle by the initial discharge capacity.
The results are shown in Table 3 below.

[TABLE 3]

| | Initial discharge capacity (mAh/g) | Rate characteristics (%) | Capacity retention (%) |
|---|---|---|---|
| Example 1 | 214 | 85 | 88 |
| Example 2 | 213 | 84 | 86 |
| Example 3 | 212 | 84 | 80 |
| Example 4 | 210 | 81 | 83 |
| Example 5 | 213 | 86 | 85 |
| Example 6 | 210 | 80 | 84 |
| Example 7 | 209 | 81 | 84 |
| Comparative Example 1 | 205 | 70 | 69 |
| Comparative Example 2 | 206 | 71 | 75 |
| Comparative Example 3 | 205 | 77 | 80 |
| Comparative Example 4 | 210 | 79 | 78 |
| Comparative Example 5 | 207 | 75 | 82 |
| Comparative Example 6 | 205 | 77 | 76 |
| Comparative Example 7 | 207 | 78 | 80 |

Referring to Tables 2 and 3 above, the examples in which the sulfur concentration gradient slope ranged from 20 cps/nm to 80 cps/nm exhibited superior initial discharge capacity, rate characteristics, and capacity retention overall, compared to the comparative examples in which the sulfur concentration gradient slope was less than 20 cps/nm or greater than 80 cps/nm.

## Claims

1. A cathode active material for a lithium secondary battery, comprising: lithium metal oxide particles; and

a sulfur (S)-containing compound and a sodium (Na)-containing compound present on the surface or inside the lithium metal oxide particles,
wherein a surface portion of the lithium metal oxide particles have a sulfur (S) concentration gradient, and the absolute value of the slope of the sulfur (S) XPS signal in the surface portion is 20 cps/nm to 80 cps/nm.

2. The cathode active material for a lithium secondary battery according to claim 1, wherein the sulfur-containing compound is distributed in the surface portion, preferably the surface portion corresponds to a depth of 200 nm or less from the surface of the lithium metal oxide particles.

3. The cathode active material for a lithium secondary battery according to claim 1 or 2, wherein the sulfur-containing compound has a structure represented by Formula 1 below, preferably the sulfur-containing compound comprises at least one selected from the group consisting of lithium sulfate ($Li_2SO_4$), lithium sulfate monohydrate ($Li_2SO_4 \cdot H_2O$), lithium ammonium sulfate ($Li(NH_4)SO_4$), lithium hydroxylammonium sulfate ($Li(NH_3)(OH)SO_4$), lithium hydrogen sulfate ($LiHSO_4$), and lithium sulfide ($Li_2S$):

[Formula 1] $Li_{x1}(NH_4)_{y1}(NH_3)_{z1}H_{w1}(OH)_{v1}S_{u1}O_{t1}$

(in Formula 1, $0 \leq x1 \leq 2$, $0 \leq y1 \leq 1$, $0 \leq z1 \leq 1$, $0 \leq w1 \leq 1$, $0 \leq v1 \leq 1$, $0 < u1 \leq 1$, and $0 \leq t1 \leq 4$).

4. The cathode active material for a lithium secondary battery according to any one of claims 1 to 3, wherein no sodium (Na) concentration gradient is present on the surface or inside the lithium metal oxide particles.

5. The cathode active material for a lithium secondary battery according to any one of claims 1 to 4, wherein the sodium-containing compound has a structure represented by Formula 2 below, preferably the sodium-containing compound comprises at least one selected from the group consisting of $LiNaSO_4$, $Na_2SO_4$, $NaHSO_4$, $Na_2S_2O_3$, $Na_2S_2O_5$, and $Na_2S_2O_8$:

[Formula 2] $Li_{x2}Na_{y2}H_{z2}S_{w2}O_{v2}$

(in Formula 2, $0 \leq x2 \leq 1$, $0 < y2 \leq 2$, $0 \leq z2 \leq 1$, $0 \leq w2 \leq 2$, and $0 \leq v2 \leq 8$).

6. The cathode active material for a lithium secondary battery according to any one of claims 1 to 5, wherein the sulfur content of the lithium metal oxide particles is 2,500 ppm to 5,000 ppm.

7. The cathode active material for a lithium secondary battery according to any one of claims 1 to 6, wherein the sodium content of the lithium metal oxide particles is 150 ppm to 600 ppm.

8. The cathode active material for a lithium secondary battery according to any one of claims 1 to 7, wherein the lithium metal oxide particles further comprise tungsten, and
the tungsten content of the lithium metal oxide particles is 3,000 ppm to 5,000 ppm.

9. The cathode active material for a lithium secondary battery according to any one of claims 1 to 8, wherein the residual lithium content of the lithium metal oxide particles is 4,000 ppm or less, preferably the residual lithium comprises at least one compound of $Li_2CO_3$ or LiOH.

10. The cathode active material for a lithium secondary battery according to any one of claims 1 to 9, wherein the lithium metal oxide particles have a median particle diameter ($D_{50}$) of 9.0 $\mu$m to 13.0 $\mu$m, and
the median particle diameter is the longest diameter of the particles at a volume fraction of 50% in a cumulative particle size distribution.

11. The cathode active material for a lithium secondary battery according to any one of claims 1 to 10, wherein the lithium metal oxide particles have a particle size distribution width (SPAN) of 0.9 to 1.5, and

the SPAN is defined by Equation 1 below:

[Equation 1]

$$SPAN=(D_{90} - D_{10})/D_{50}$$

(in Equation 1, $D_{10}$ denotes the longest particle diameter at a volume fraction of 10% in the cumulative particle size distribution, $D_{50}$ denotes the longest particle diameter at a volume fraction of 50% in the cumulative particle size distribution, and $D_{90}$ denotes the longest particle diameter at a volume fraction of 90% in the cumulative particle size distribution).

**12.** A method for preparing a cathode active material for a lithium secondary battery, the method comprising:

mixing and coprecipitating metal salts of active material components to obtain an active material precursor;
mixing the active material precursor with a lithium source and performing primary calcination to obtain a lithium metal oxide particle precursor;
pre-coating the lithium metal oxide particle precursor with a sulfur-containing coating material;
drying the pre-coated lithium metal oxide particle precursor in a dryer maintained at an internal temperature of 100 °C to 250 °C; and
performing secondary calcination of the dried, pre-coated lithium metal oxide particle precursor at a temperature greater than 250 °C and less than 500 °C.

**13.** The method according to claim 12, wherein in the drying step, the drying is performed while introducing water into the dryer, preferably the amount of water introduced into the dryer is 12% by weight or less based on the total weight of the pre-coated lithium metal oxide particle precursor.

**14.** The method according to claim 13, wherein the time required for introducing water into the dryer is 10 to 45 minutes.

**15.** A lithium secondary battery comprising:

a cathode comprising the cathode active material according to any one of claims 1 to 11;
an anode disposed opposite the cathode; and
a separator interposed between the cathode and the anode.

[FIG. 1]

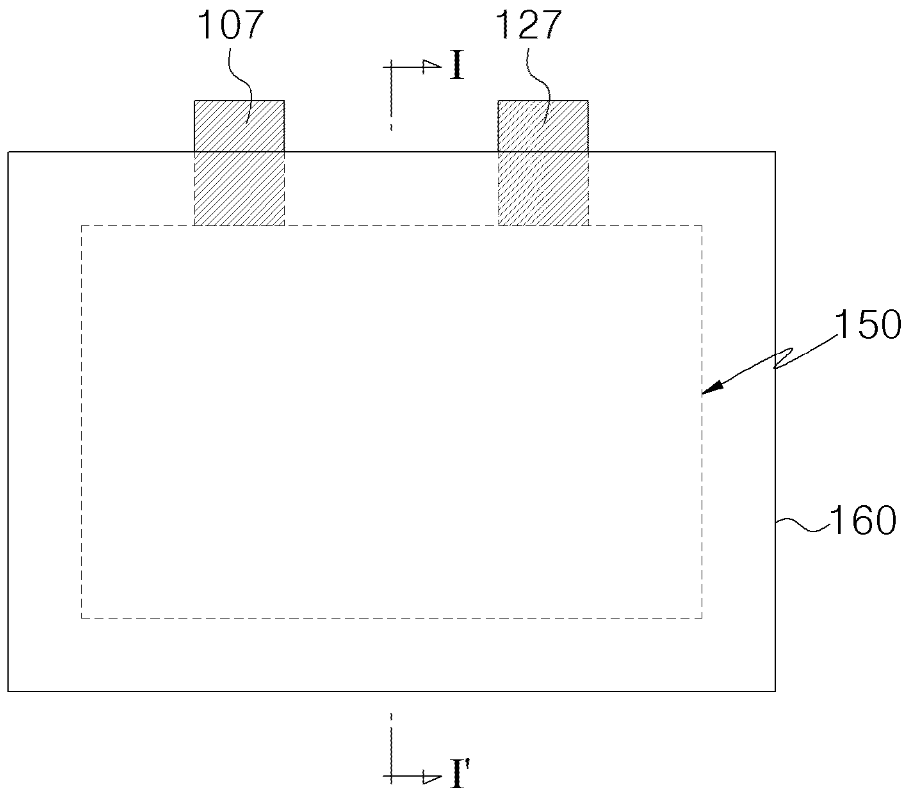


[FIG. 2]

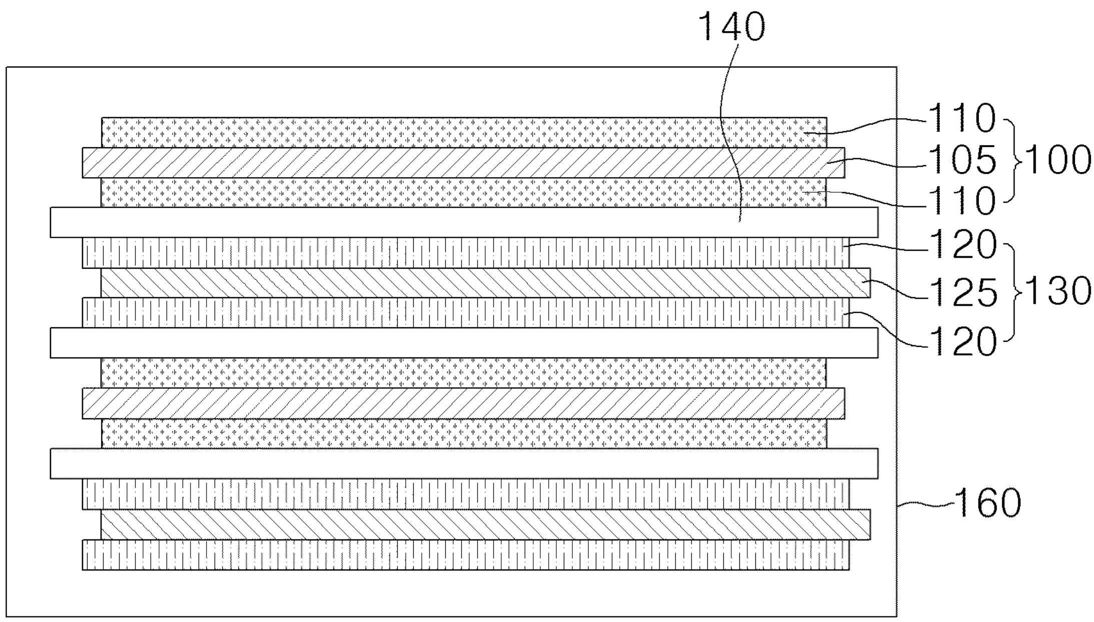

[FIG. 3]

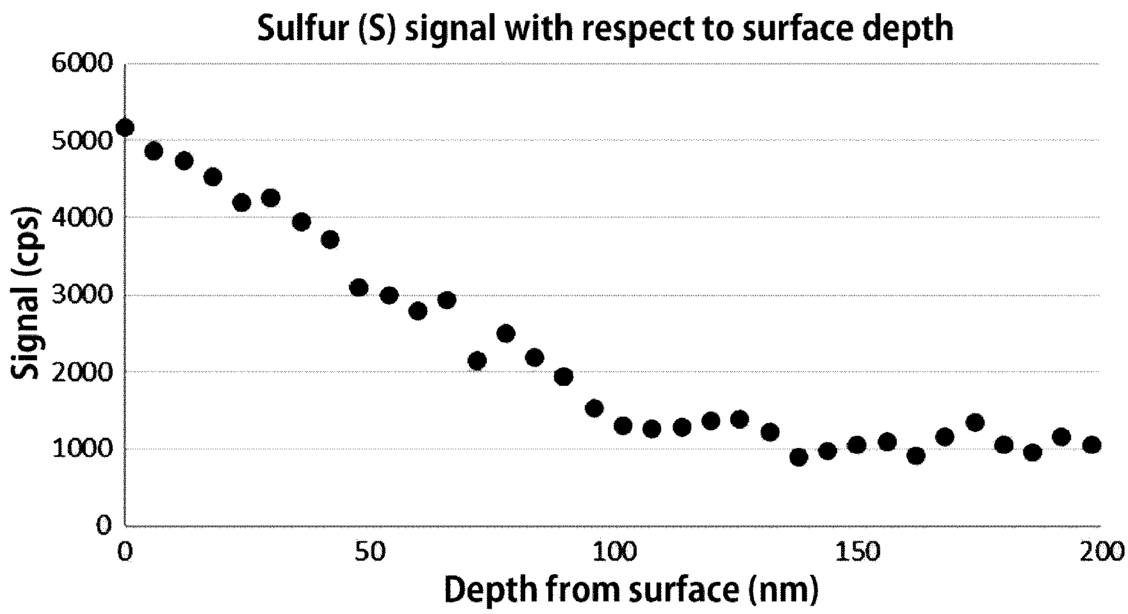
Sulfur (S) signal with respect to surface depth
6000
5000
4000
3000
2000
1000
0
Signal (cps)
0
50
100
150
200
Depth from surface (nm)

[FIG. 4]

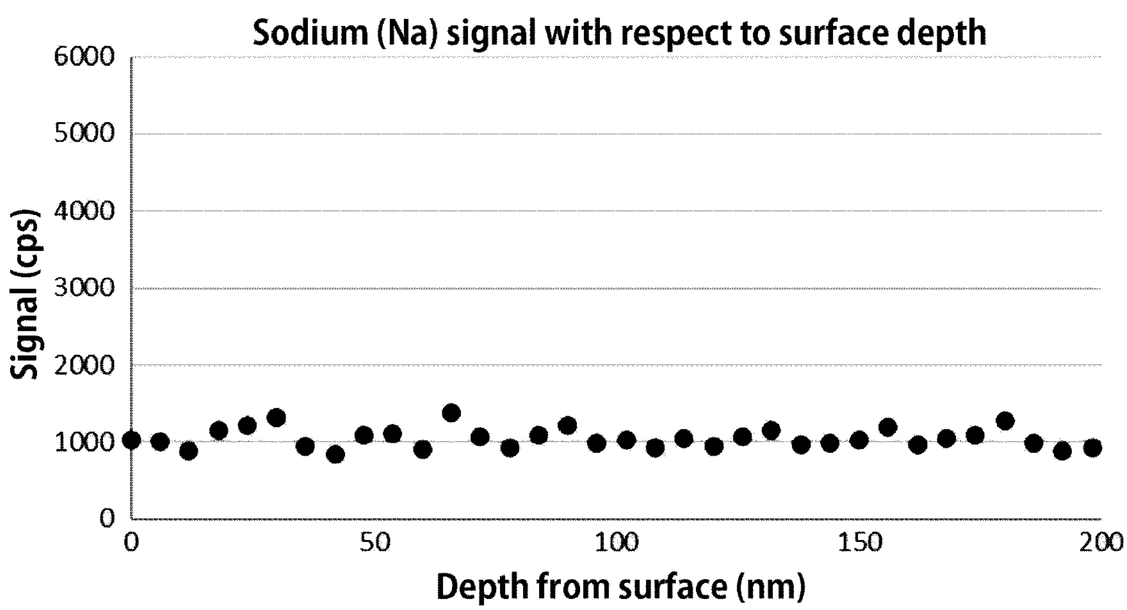
Sodium (Na) signal with respect to surface depth
6000
5000
4000
3000
2000
1000
0
Signal (cps)
0
50
100
150
200
Depth from surface (nm)

[FIG. 5]

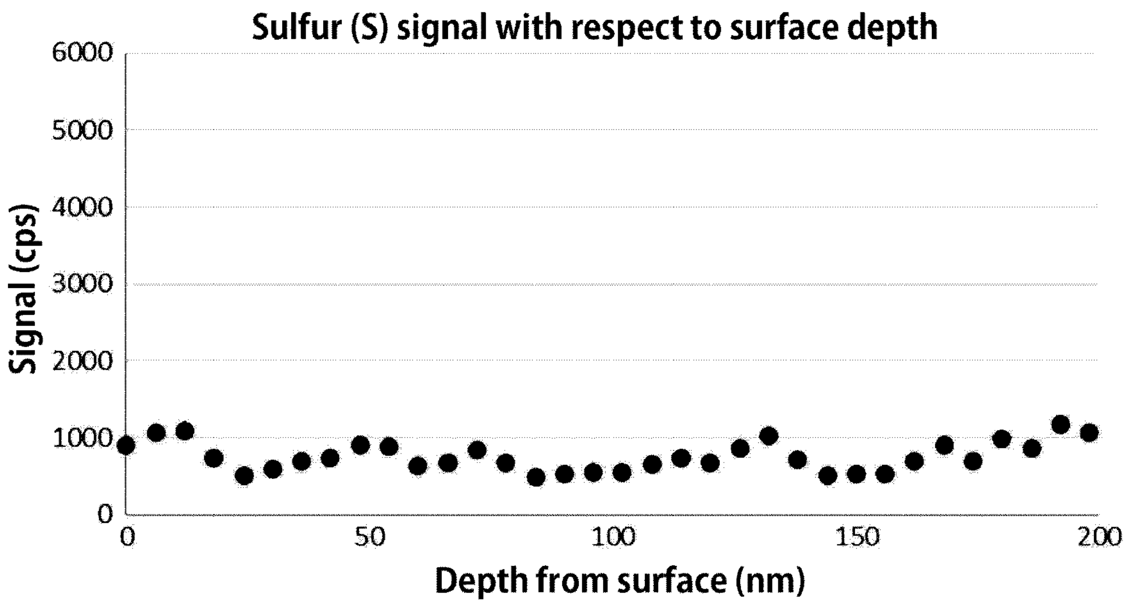
Sulfur (S) signal with respect to surface depth
6000
5000
4000
3000
2000
1000
0
Signal (cps)
0
50
100
150
200
Depth from surface (nm)

[FIG. 6]

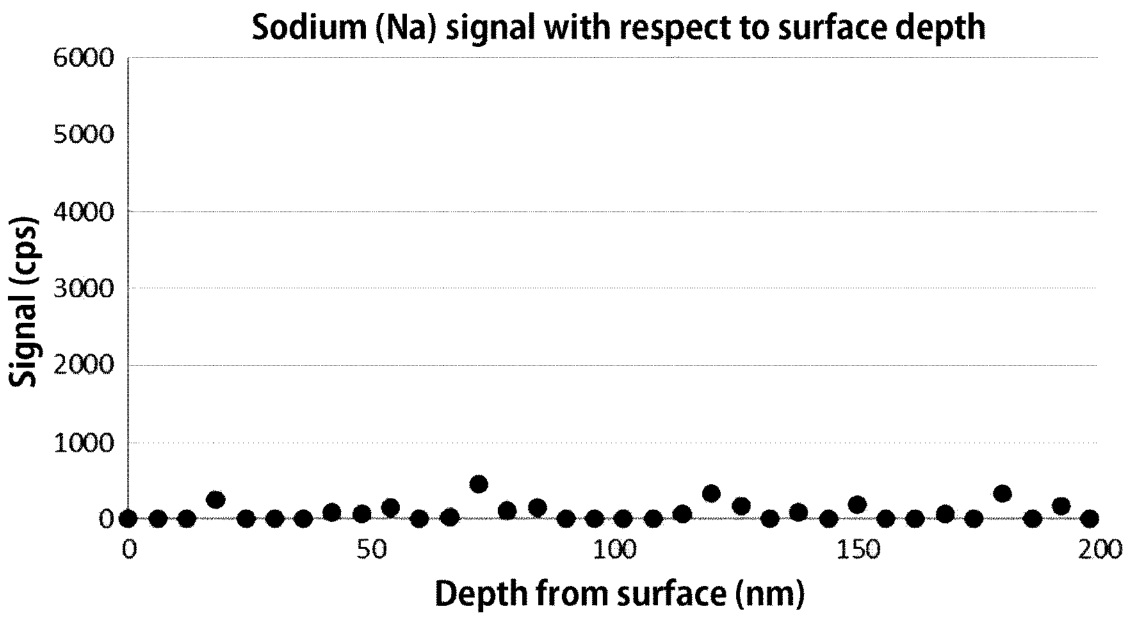
Sodium (Na) signal with respect to surface depth
6000
5000
4000
3000
2000
1000
0
Signal (cps)
0
50
100
150
200
Depth from surface (nm)

[FIG. 7]

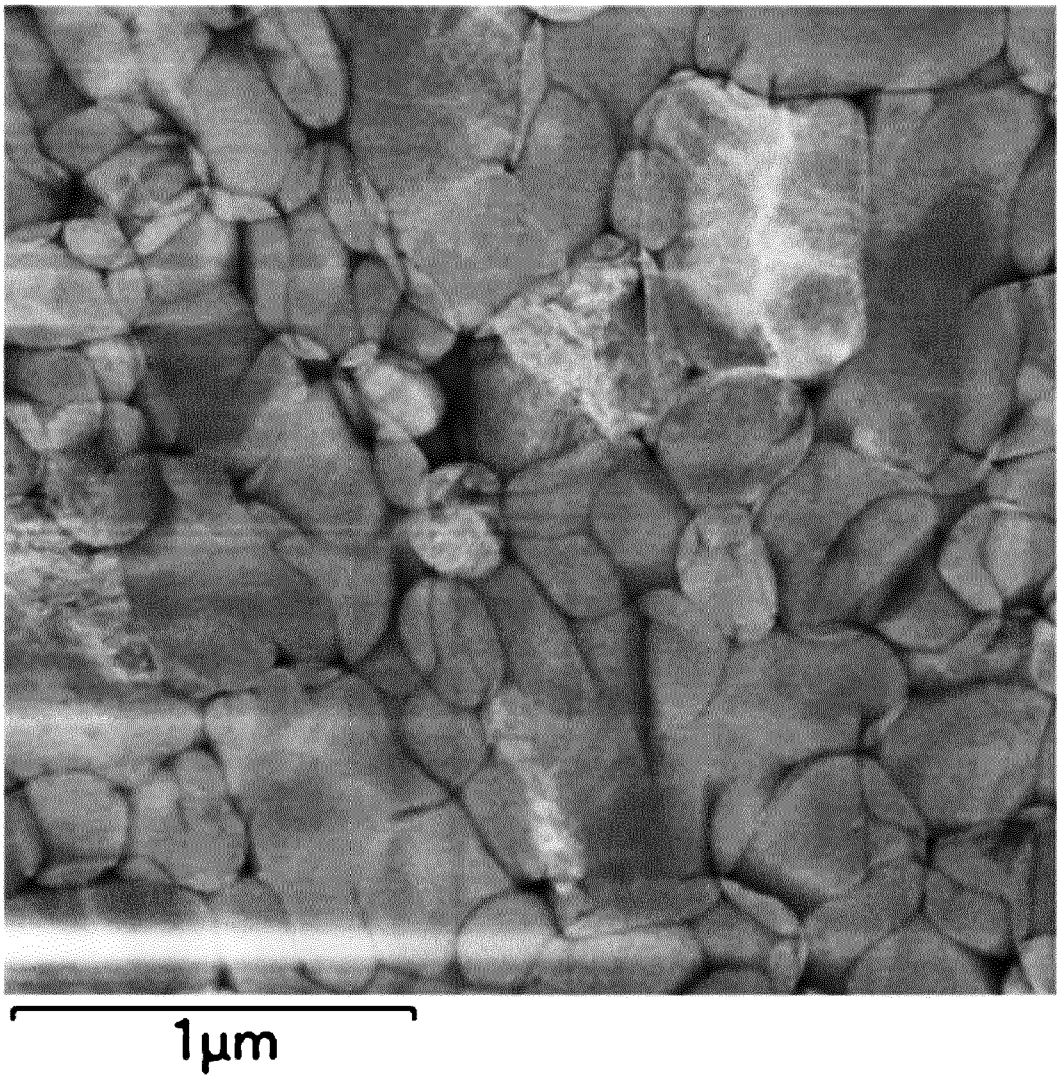

[FIG. 8]

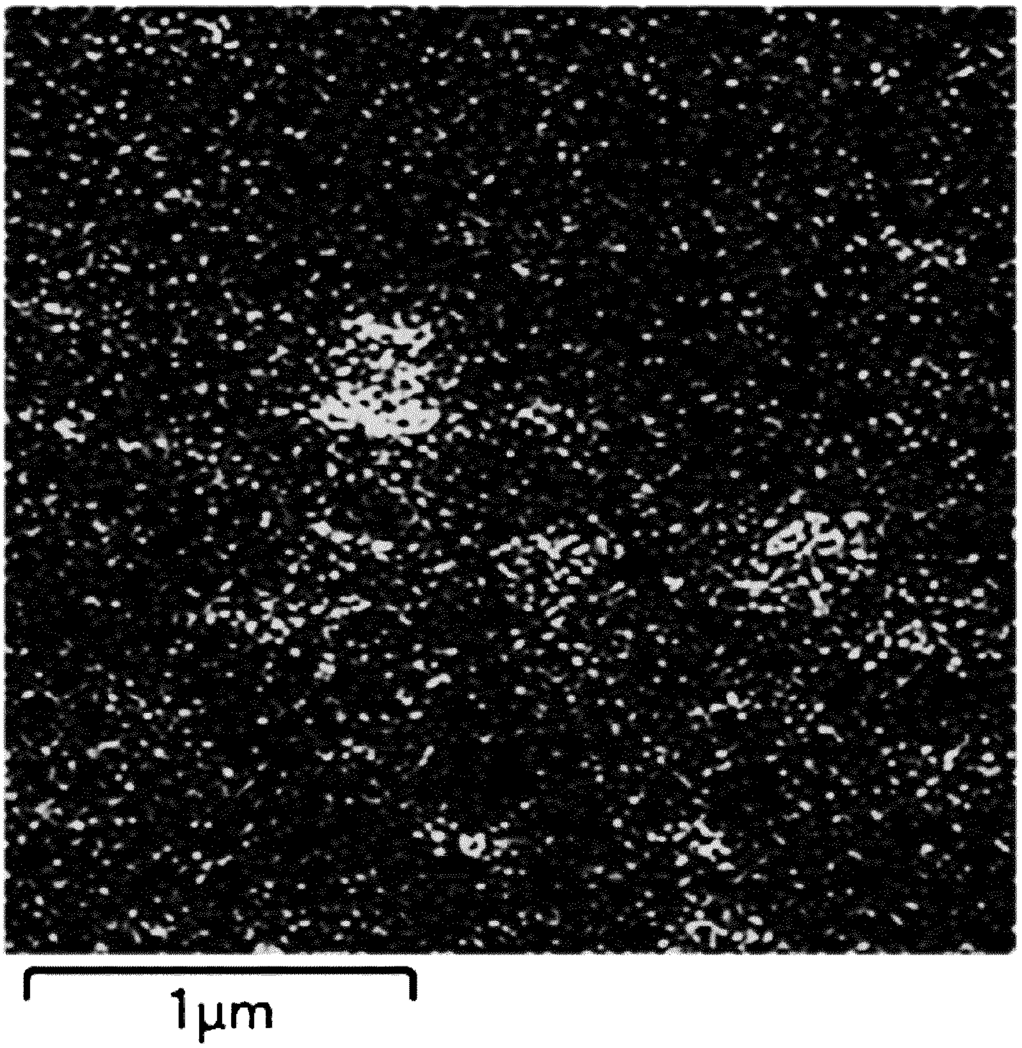

[FIG. 9]

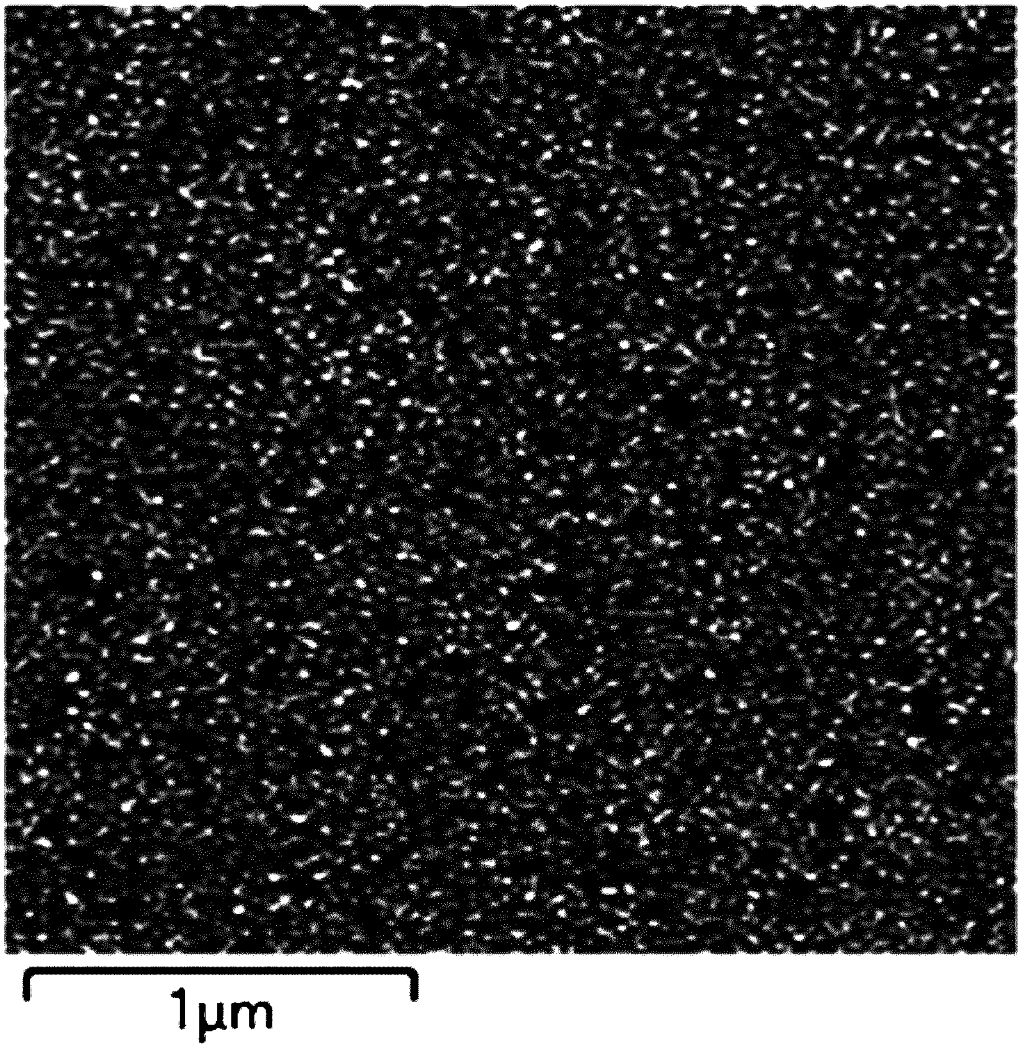

Europäisches Patentamt
European Patent Office
Office européen des brevets

# EUROPEAN SEARCH REPORT

Application Number
EP 26 15 3139

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 477 623 A1 (SK INNOVATION CO LTD [KR]; SK ON CO LTD [KR]) 18 December 2024 (2024-12-18) * paragraphs [0121] - [0126]; example 1 * ----- | 1-15 | INV. C01G53/42 C01G53/84 H01M4/525 H01M10/0525 |
| X | KR 102 686 700 B1 (SK ON CO LTD [KR]) 19 July 2024 (2024-07-19) * the whole document * -& EP 4 506 310 A1 (SK ON CO LTD [KR]) 12 February 2025 (2025-02-12) * paragraphs [0164] - [0172], [0179]; examples 6-16; table 1 * ----- | 1-7,9-15 | |
| X | EP 4 037 024 A2 (POSCO [KR]; RES INST IND SCIENCE & TECH [KR]; POSCO CHEM CO LTD [KR]) 3 August 2022 (2022-08-03) * paragraphs [0069] - [0077]; example 1 * ----- | 1-7,9-15 | |
| | | | TECHNICAL FIELDS SEARCHED (IPC) |
| | | | C01G H01M |

The present search report has been drawn up for all claims

1

| Place of search | Date of completion of the search | Examiner |
|---|---|---|
| Munich | 22 June 2026 | King, Ruth |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.....................................................................
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 26 15 3139

This annex lists the patent family members relating to the patent documents cited in the above-mentioned European search report. The members are as contained in the European Patent Office EDP file on
The European Patent Office is in no way liable for these particulars which are merely given for the purpose of information.

22-06-2026

| Patent document cited in search report | Publication date | Patent family member(s) | Publication date |
|---|---|---|---|
| EP 4477623 A1 | 18-12-2024 | CN 119008932 A | 22-11-2024 |
| | | EP 4477623 A1 | 18-12-2024 |
| | | KR 20240165677 A | 25-11-2024 |
| | | US 2024387815 A1 | 21-11-2024 |
| KR 102686700 B1 | 19-07-2024 | CN 117352690 A | 05-01-2024 |
| | | EP 4506310 A1 | 12-02-2025 |
| | | KR 102686700 B1 | 19-07-2024 |
| | | US 2025054954 A1 | 13-02-2025 |
| EP 4506310 A1 | 12-02-2025 | CN 117352690 A | 05-01-2024 |
| | | EP 4506310 A1 | 12-02-2025 |
| | | KR 102686700 B1 | 19-07-2024 |
| | | US 2025054954 A1 | 13-02-2025 |
| EP 4037024 A2 | 03-08-2022 | CN 114631205 A | 14-06-2022 |
| | | EP 4037024 A2 | 03-08-2022 |
| | | JP 7754963 B2 | 15-10-2025 |
| | | JP 2022550726 A | 05-12-2022 |
| | | JP 2024056857 A | 23-04-2024 |
| | | KR 20210035473 A | 01-04-2021 |
| | | US 2022344657 A1 | 27-10-2022 |
| | | WO 2021060820 A2 | 01-04-2021 |

EPO FORM P0459

For more details about this annex : see Official Journal of the European Patent Office, No. 12/82